# EUROPEAN PATENT SPECIFICATION

(11) **EP 3 484 007 B1**
(45) Date of publication and mention of the grant of the patent: **30.11.2022**
(21) Application number: 18203862.0
(22) Date of filing: 31.10.2018
(51) Int. Cl.: H02J 3/38, H02M 7/5395, H02M 5/453

(54) **DFIG CONVERTER OVERMODULATION**
ÜBERMODULATION EINES UMRICHTERS FÜR EINEN DOPPPELT GESPEISTEN ASYNCHRONGENERATOR
SURMODULATION DE CONVERTISSEUR DFIG

(30) Priority: 09.11.2017 US 201715807861
(43) Date of publication of application: 15.05.2019
(73) Proprietor: General Electric Company, Schenectady, NY 12345 (US)
(72) Inventor: SCHNETZKA, Harold Robert, Greenville, SC South Carolina 29615 (US); WAGONER, Robert Gregory, Salem, VA Virginia 24153 (US); GANIREDDY, Govardhan, Salem, VA Virginia 24153 (US); BOLLENBECKER, John Leo, Schenectady, NY New York 12345 (US); BOOTH, Michael Christopher, Greenville, SC South Carolina 29615 (US); VENKITANARAYANAN, Vaidhya Nath, Schenectady, NY New York 12345 (US)
(74) Representative: Zimmermann & Partner Patentanwälte mbB

(56) References cited:
- EP-A1- 0 808 016
- WO-A1-2017/148252
- CN-A- 105 375 523
- CN-A- 106 505 620
- CN-A- 107 332 484
- US-A1- 2010 127 656

## Description

The present disclosure relates generally to electrical power systems including a power converter for providing power to a power grid from, for example, wind turbines, and corresponding methods.

Wind turbines have received increased attention as a renewable energy source. Wind turbines use the wind to generate electricity. The wind turns multiple blades connected to a rotor. The spin of the blades caused by the wind spins a shaft of the rotor, which connects to a generator that generates electricity. Certain wind turbines include a doubly fed induction generator (DFIG) to convert wind energy into electrical power suitable for output to an electrical grid. DFIGs are typically connected to a converter that regulates the flow of electrical power between the DFIG and the grid. More particularly, the converter allows the wind turbine to output electrical power at the grid frequency regardless of the rotational speed of the wind turbine blades.

A typical DFIG system as e.g. described in CN 107 332 484 A includes a wind driven DFIG having a rotor and a stator. The stator of the DFIG is coupled to the electrical grid through a stator bus. A power converter is used to couple the rotor of the DFIG to the electrical grid. The power converter can be a two-stage power converter including both a rotor-side converter and a line-side converter. The rotor-side converter can receive alternating current (AC) power from the rotor via a rotor-side bus and can convert the AC power to a DC power. The line-side converter can then convert the DC power to AC power having a suitable output frequency, such as the grid frequency. The AC power is provided to the electrical grid via a line-side bus. As e.g. described in CN 106 505 620 A, a transformer may be used at the point of common coupling (PCC) between the DFIG and the grid.

Various aspects and advantages of embodiments of the present disclosure will be set forth in part in the following description, or may be learned from the description, or may be learned through practice of the embodiments.

The invention is set out in the appended set of claims.

Detailed discussion of embodiments directed to one of ordinary skill in the art are set forth in the specification, which makes reference to the appended figures, in which:
FIG. 1 is a perspective view of a wind turbine according to example embodiments of the present disclosure;
FIG. 2 illustrates an electrical power system according to example embodiments of the present disclosure;
FIG. 3 illustrates a schematic diagram of suitable components that may be included within a controller of a wind turbine and/or electrical power system and/or a controller of a power converter according to example embodiments of the present disclosure;
FIG. 4 illustrates a schematic diagram of an example power converter suitable for use with the wind turbine system according to example embodiments of the present disclosure;
FIG. 5 illustrates an example overmodulation regime used to control one or more control devices according to example embodiments of the present disclosure
FIG. 6 illustrates an example quasi-square wave signal that can be provided to a rotor in accordance with example embodiments of the present disclosure.
FIG. 7 illustrates an example square wave signal that can be provided to a rotor in accordance with example embodiments of the present disclosure.
FIG. 8 illustrates an example active filter suitable for use with a wind turbine system according to example embodiments of the present disclosure.
FIGS. 9, 10, 11, 12, 13, and 14 depict example electrical power systems including an active filter according to example embodiments of the present disclosure.
FIG. 15 illustrates an example method of operating an electrical power converter for a doubly fed induction generator system according to example embodiments of the present disclosure.

Reference now will be made in detail to embodiments, one or more examples of which are illustrated in the drawings. Each example is provided by way of explanation of the embodiments, not limitation of the present disclosure.

Example aspects of the present disclosure are directed to systems and methods for operating a power converter in a doubly-fed induction generator (DFIG) system. A DFIG system includes a power converter having a line-side converter and a rotor-side converter. A DC link is coupled between the line-side converter and the rotor-side converter. The power converter converts an AC power from a stator of the DFIG to a DC power for the DC link using the line-side converter. The power converter converts the DC power on the DC link to an AC signal for the rotor of the DFIG using the rotor-side converter. For instance, the AC signal is provided on a rotor bus coupled between the rotor-side converter and the rotor of the DFIG. The AC signal is used to, for example, control operating characteristics of the DFIG.

According to embodiments of the present disclosure, the rotor-side converter includes one or more switching elements. The switching elements can be, in some embodiments, any variety of suitable switching elements, such as insulated gate bipolar transistors (IGBTs), insulated gate commuted thyristors, MOSFETs (e.g. Silicon or Silicon Carbide based MOSFETs), bipolar transistors, silicon controlled rectifiers, or other suitable switching elements. The switching elements are controlled to convert a DC signal on the DC link to an AC signal for the rotor of the DFIG, using, for instance, pulse width modulation. According to embodiments of the present disclosure, the switching elements are controlled according to an overmodulation regime to produce the AC signal on the rotor-side converter.

Modulation of the switching elements is achieved by comparing a modulating wave to a carrier wave and modulating the switching elements based on that comparison. The switching elements are toggled whenever the carrier wave and modulating wave intersect. In an overmodulation regime, the maximum amplitude of the modulating wave is greater than the maximum amplitude of the carrier wave. This can result in some pulses of the carrier wave not being intersected by the modulating wave. In some embodiments, the modulating wave can be a periodic, constant-amplitude sinusoidal signal and the carrier wave can be a periodic triangle wave, but other suitable waveforms for both the modulating and carrier waves can be used in accordance with the present disclosure, such as sinusoidal waves, symmetric triangle waves, asymmetric triangle waves including sawtooth waves, square waves, quasi-square waves, and other suitable waveforms.

In some embodiments, the rotor-side converter is operated in an overmodulation regime such that the output of the rotor-side converter is a quasi-square wave AC signal. For instance, a line-to-line voltage waveform at the rotor can be a six-step quasi-square wave having a region of low voltage and a region of high voltage with a region of intermediate voltage, such as a reference or zero voltage, in between the region of low voltage and the region of high voltage.

Operating the rotor-side converter in an overmodulation regime can have several advantages. For instance, in some embodiments, the voltage gain from the DC link to the rotor can be increased relative to a non-overmodulated regime. In some embodiments, this can contribute to an increased RPM operating range of the generator. Additionally, operating the rotor-side converter in an overmodulation regime can result in a decrease in the switching frequency of the switching elements. This can reduce energy lost during modulation of the switching elements, and can additionally reduce wear and/or allow higher currents on the switching elements. Other advantages may include extended higher limit of the continuous operating grid voltage, improved controllability and/or reduced stress during transient grid voltages and/or high-voltage-ride-through (HVRT), extended overspeed limits for a wind turbine system, lower DC Link regulation by the line-side converter during low grid voltage conditions, and/or higher generator speeds.

Operating the rotor-side converter in an overmodulation regime can contribute to increased harmonics in the generator. In some instances, the increased harmonics can propagate to other elements in the power system, such as a connected power grid. Additionally, the harmonics with the largest increase can have similar frequencies to the fundamental frequency (i.e. the power output of the generator), such as the third, fifth, seventh, or other lower-order harmonics. Filtering these harmonics is typically more difficult than higher-order harmonics (e.g., the fiftieth harmonic) due to their magnitude and/or closeness to the fundamental frequency.

An active filter is provided to counteract or reduce the harmonic contributions from operating the rotor-side converter in the overmodulation regime. The active filter is activated whenever harmonic contributions in the system do not satisfy a threshold, such as an industry standard, for example, to conserve resources within the system and/or prevent wear on the active filter. For instance, it may be possible to activate the active filter when the lower-order harmonics exceed grid requirements. For example, the active filter can provide active power at the same frequency as a harmonic but at opposite phase to near-entirely or entirely cancel the harmonic.

The active filter can be provided at different locations within the electric power system. For instance, the active filter can be provided at an electrical line between the power converter and the power grid or between the stator of the generator and the power grid. In some embodiments, a transformer (e.g. a three-winding transformer), is electrically coupled to the power grid, the stator of the generator, and/or the power converter. The active filter can be provided at, for instance, an electrical line between the power converter and the transformer, or between the power grid and the transformer, or between the stator and the transformer.

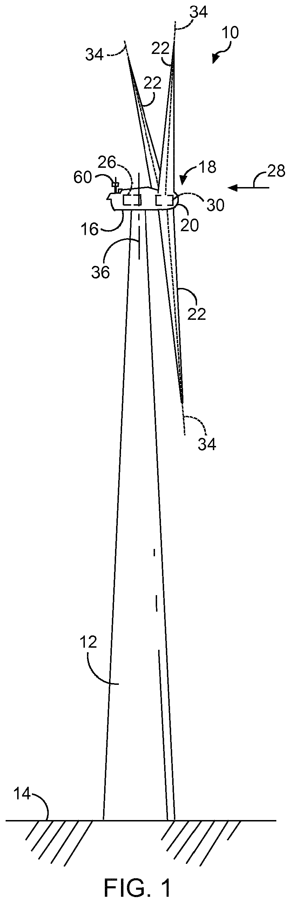

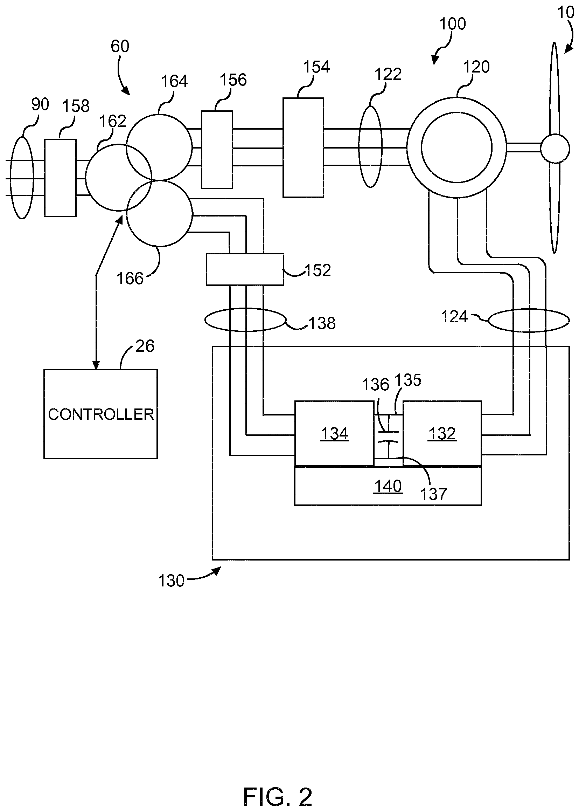

Referring now to the figures, FIG. 1 illustrates a perspective view of one embodiment of a wind turbine 10. As shown, the wind turbine 10 includes a tower 12 extending from a support surface 14, a nacelle 16 mounted on the tower 12, and a rotor 18 coupled to the nacelle 16. The rotor 18 includes a rotatable hub 20 and at least one rotor blade 22 coupled to and extending outwardly from the hub 20. For example, in the illustrated embodiment, the rotor 18 includes three rotor blades 22. However, in an alternative embodiment, the rotor 18 may include more or less than three rotor blades 22. Each rotor blade 22 may be spaced about the hub 20 to facilitate rotating the rotor 18 to enable kinetic energy to be transferred from the wind into usable mechanical energy and, subsequently, electrical energy. For instance, the hub 20 may be rotatably coupled to an electric generator 120 of FIG. 2 positioned within the nacelle 16 to permit electrical energy to be produced. The wind turbine 10 may further include a turbine controller 26 utilized to control yaw adjustment of the wind turbine 10, pitch adjustment of the rotor blades 22, and/or torque adjustment of the generator 120 of FIG. 2. The turbine controller 26 may interface with components within the wind turbine 10, such as the converter controller 140 of FIG. 2.

Referring now to FIG. 2, a schematic diagram of one embodiment of a DFIG wind turbine system 100 is illustrated in accordance with aspects of the present subject matter. It should be appreciated that the present subject matter will generally be described herein with reference to the system 100 shown in FIG. 2.

As shown, a generator 120, e.g. a DFIG 120, is coupled to a stator bus 122 and a power converter 130 via a rotor-side bus 124. The stator bus 122 provides an output multiphase power (e.g. three-phase power) from a stator of DFIG 120 and the rotor-side bus 124 provides an output multiphase power (e.g. three-phase power) of the rotor of DFIG 120. The power converter 130 has a rotor-side converter 132 and a line-side converter 134. The DFIG 120 is coupled via the rotor-side bus 124 to the rotor-side converter 132. The rotor-side converter 132 is coupled to the line-side converter 134 which in turn is coupled to a line-side bus 138. The rotor-side converter 132 and the line-side converter 134 is coupled via a DC link 135 across which is the DC link capacitor 136.

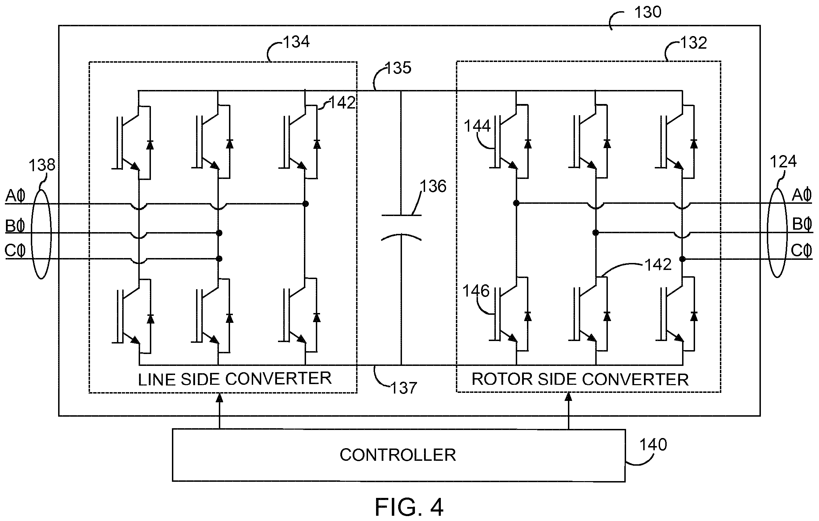

In addition, the power converter 130 is coupled to a converter controller 140 in order to control the operation of the rotor-side converter 132 and the line-side converter 134. For instance, the converter controller 140 is configured to operate the rotor-side converter 132 in an overmodulation regime. The converter controller 140 may include any number of control devices. In one embodiment, the control devices may include a processing device (e.g. microprocessor, microcontroller, etc.) executing computer-readable instructions stored in a computer-readable medium. The instructions, when executed by the processing device, may cause the processing device to perform operations, including providing control commands (e.g. switching frequency commands) to the switching elements 142 of the power converter 130. For instance, the instructions may include providing control commands to the switching elements 142 of FIG. 4 of the rotor-side converter 132 to operate the rotor-side converter 132 (e.g. by the switching elements 142) in an overmodulation regime.

As illustrated, the system 100 includes a transformer 160 coupling the wind turbine system 100 to an electrical grid 190. The transformer 160 can be a three-winding transformer that can include a high voltage (e.g. greater than 12 KVAC) primary winding 162 e.g. coupled to the electrical grid, a medium voltage (e.g. 6 KVAC) secondary winding 164 e.g. coupled to the stator bus 122, and/or a low voltage (e.g. 575 VAC, 690 VAC, etc.) auxiliary winding 166 e.g. coupled to the line-side bus 138. It should be understood that the transformer 160 can be a three-winding transformer as shown, or alternatively may be a two-winding transformer having only a primary winding 162 and a secondary winding 164; may be a four-winding transformer having a primary winding 162, a secondary winding 164, an auxiliary winding 166, and an additional auxiliary winding; or may have any other suitable number of windings.

On the stator bus 122, sinusoidal multi-phase (e.g. three-phase) alternating current (AC) power can be provided from the stator of the generator 120 to the stator bus 122, and from the stator bus 122 to the transformer 160, e.g. to the secondary winding 164 thereof. Various circuit breakers, fuses, contactors, and other devices, such as grid circuit breaker 158, stator bus circuit breaker 156, switch 154, and line-side bus circuit breaker 152, can be included in the system 100 to connect or disconnect corresponding buses, for example, when current flow is excessive and can damage components of the wind turbine system 100 or for other operational considerations. Additional protection components can also be included in the wind turbine system 100.

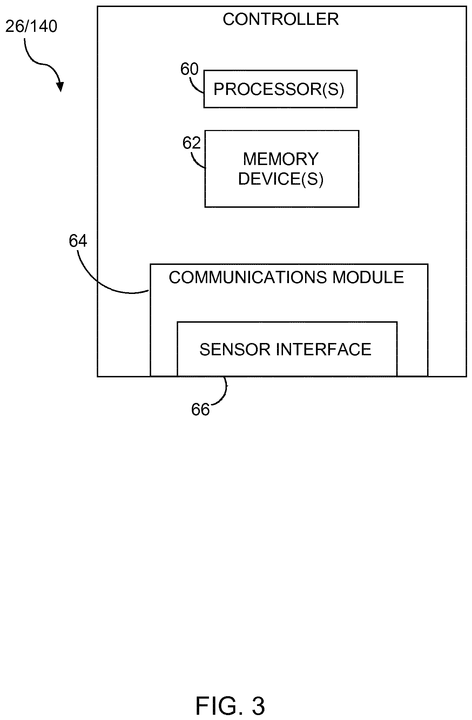

Referring now to FIG. 3, there is illustrated a block diagram of one embodiment of suitable components (e.g., one or more control devices) that may be included within the turbine controller 26 and/or the converter controller 140 in accordance with aspects of the present subject matter. As shown, the controller 26/140 may include one or more processor(s) 60 and associated memory device(s) 62 configured to perform a variety of computer-implemented functions (e.g., performing the methods, steps, calculations and the like disclosed herein). Additionally, the controller 26/140 may also include a communications module 64 to facilitate communications between the controller 26/140 and the various components of the wind turbine 10. For instance, the communications module 64 may serve as an interface to permit the turbine controller 26 to transmit control signals to one or more pitch adjustment mechanisms to, for instance, control the pitch of the rotor blades 22. The communications module 64 may additionally and/or alternatively serve as an interface to permit the turbine controller 26 to transmit signals (e.g. control signals or status signals) to the converter controller 140. The communications module 64 may additionally and/or alternatively serve to permit the converter controller 140 to provide control signals to the power converter 130. Moreover, the communications module 64 may include a sensor interface 66 (e.g., one or more analog-to-digital converters) to permit input signals transmitted from, for example, various sensors, to be converted into signals that can be understood and processed by the processors 60.

Referring now to FIG. 4, a schematic diagram of an example embodiment of the power converter 130 shown in FIG. 2 is illustrated in accordance with aspects of the present subject matter. As shown, the rotor-side converter 132 includes a plurality of bridge circuits, with each phase of the rotor-side bus 124 input to the rotor-side converter 132 being coupled to a single bridge circuit. In addition, the line-side converter 134 may also include a plurality of bridge circuits. Similar to the rotor-side converter 132, the line-side converter 134 also includes a single bridge circuit for each output phase of the line-side converter 134. In other embodiments, the line-side converter 134, the rotor-side converter 132, or both the line-side converter 134 and the rotor-side converter 132 may include parallel bridge circuits without deviating from the scope of the present disclosure.

Each bridge circuit may generally include a plurality of switching elements (e.g. IGBTs) 142 coupled in series with one another. For instance, as shown in FIG. 4, each bridge circuit includes an upper switching element 144 and a lower switching element 146. In addition, a diode may be coupled in parallel with each of the switching elements 142. In alternative embodiments, parallel switching elements 142 and diodes may be used to increase the current rating of the converter. As is generally understood, the line-side converter 134 and the rotor-side converter 132 may be controlled, for instance, by providing control commands, using a suitable driver circuit, to the gates of the switching elements 142. For example, the converter controller 140 may provide suitable gate timing commands to the gates of the switching elements 142 of the bridge circuits. The control commands may control the switching frequency of the switching elements 142 to provide a desired output. It should be appreciated by those of ordinary skill in the art that the power converter 130 may include any suitable switching elements 142, such as insulated gate bipolar transistors (IGBTs), insulated gate commuted thyristors, MOSFETs (e.g. Silicon or Silicon Carbide based MOSFETs), bipolar transistors, silicon controlled rectifiers, or other suitable switching elements.

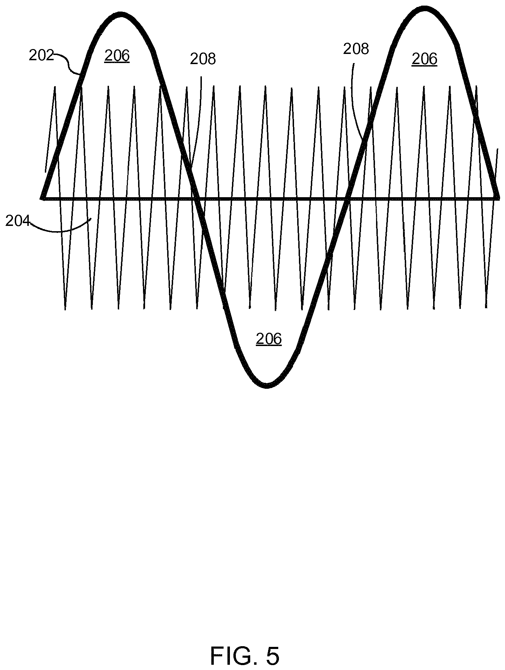

FIG. 5 illustrates a graphical representation of an example overmodulation regime 200 used to control switching devices within a power converter according to example embodiments of the present disclosure. Those skilled in the art, using the disclosures provided herein, will understand that a variety of suitable overmodulation regimes and/or configurations may be used without departing from the scope of the present disclosure defined in the claims.

According to the overmodulation regime 200, a modulating wave 202 is compared to a carrier wave 204. The modulating wave 202 is illustrated as a constant amplitude, constant frequency sinusoidal signal, but may be any of a variety of suitable waveforms including sinusoidal waves, sinusoidal waves with harmonic additions, square waves, quasi-square waves, and other suitable waveforms. The carrier wave 204 is illustrated as a constant amplitude, constant frequency symmetric triangle wave but may be any of a variety of suitable waveforms including sinusoidal waves, symmetric triangle waves, asymmetric triangle waves including sawtooth waves, square waves, quasi-square waves, and other suitable waveforms. In addition, the frequency and/or the amplitude of the modulating wave 202 and/or the carrier wave 204 may be varied as a function of time.

Switching elements (e.g. switching elements 142) are controlled based on the overmodulation regime 200. For instance, the switching elements (e.g. switching elements 142) are toggled, e.g. by sending control signals from a controller (e.g. converter controller 140) to bias voltage across the gates of the switching elements 142, whenever modulating wave 202 and carrier wave 204 intersect, e.g. at intersections 208. The modulating wave 202 may correspond to only one switching device or may correspond to several switching elements. A plurality of modulating waves 202 and/or carrier waves 204 may be provided. For example, a plurality of modulating waves 202 may be compared to a single carrier wave 204 wherein each modulating wave 202 in the plurality of modulating waves 202 corresponds to one or more switching elements. The plurality of modulating waves 202 may be in phase or out of phase (e.g. out of phase by 60 degrees, 120 degrees, 180 degrees, etc.). Alternatively, multiple pairs of modulating waves 202 and carrier waves 204 may be provided wherein each pair of modulating waves 202 and carrier waves 204 corresponds to one or more switching elements. Other suitable control schemes may be used, e.g. based on the configuration and/or type of switching elements.

The amplitude of the modulating wave 202 is larger than the amplitude of the carrier wave 204, resulting in overmodulation regions 206 wherein the modulating wave 202 does not intersect the carrier wave 204. In other words, there are "dropped pulses" of the carrier wave 204 that are not used to control the switching elements. Generally, the larger the difference in amplitude between the modulating wave 202 and carrier wave 204, the larger the overmodulation region 206. For instance, if the difference in amplitude between the modulating wave 202 and carrier wave 204 is large enough, the modulating wave 202 may intersect the carrier wave 204 only twice during one period of the modulating wave 202.

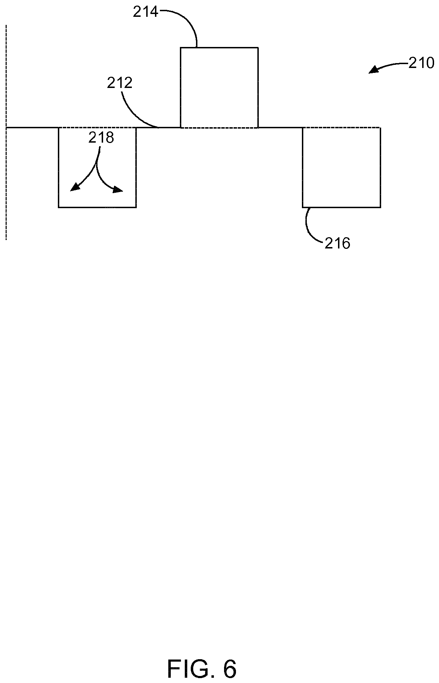

Switching devices (e.g. switching devices 142) are controlled in accordance with an overmodulation regime (e.g. overmodulation regime 200) to produce a time-varying AC signal. The time-varying AC signal can be, for instance, the quasi-square wave 210 shown in FIG. 6. The quasi-square wave 210 may be a line-to-line voltage between two lines in an AC bus, such as rotor-side bus 124. The quasi-square wave 210 may represent other configurations as well. As can be seen in FIG. 6, the quasi-square wave 210 has a region of intermediate voltage 212 between a region of high voltage 214 and a region of low voltage 216. The region of intermediate voltage 212 may be at zero volts, or may be at some non-zero reference voltage. The edges 218 may correspond to toggling of switching elements. The edges 218 are shown to be ideal, i.e. instantaneous, but those skilled in the art, using the disclosures provided herein, will understand that the edges 218 may be slightly uneven or diagonal.

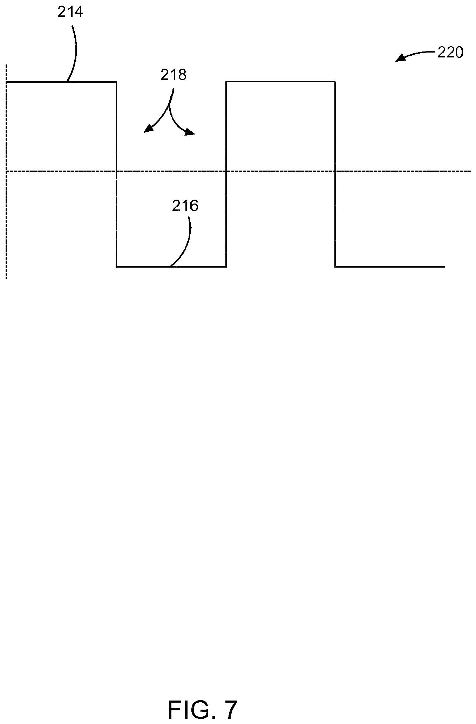

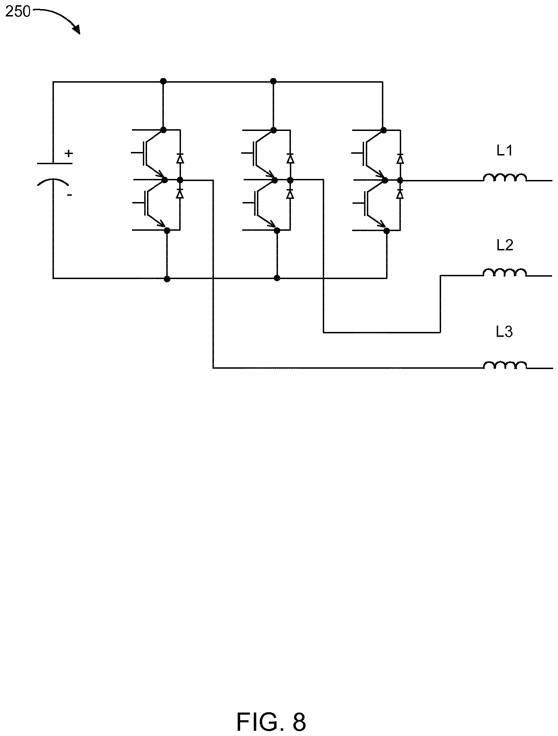

The time-varying AC signal produced from an overmodulation regime (e.g. overmodulation regime 200) if viewed from the power converter line to a reference such as the negative DC link (137 of FIG. 4) can be the square wave 220 shown in FIG. 7. The square wave 220 may be a line-to-refence voltage between a line in an AC bus, such as rotor-side bus 124, and a reference, such as the negative side 137 of DC link 135. The square wave 220 may represent other configurations as well. As can be seen in FIG. 7, the square wave 220 has edges 218 directly between regions of high voltage 214 and regions of low voltage 216 (i.e. without a region of intermediate voltage 212). The edges 218 may correspond to toggling of switching elements. The edges 218 are shown to be ideal, i.e. instantaneous, but those skilled in the art, using the disclosures provided herein, will understand that the edges 218 may be slightly uneven or diagonal. In some embodiments, an active filter, such as parallel active filter 250 illustrated in FIG. 8, is provided in an electrical power system (e.g. electrical power system 100) to reduce or cancel harmonics caused by operating a rotor-side converter in an overmodulation regime (e.g. rotor-side converter 132). For instance, the active filter 250 reduces or cancels harmonics to satisfy one or more grid requirements for harmonics. The active filter 250 may provide current at about the same frequency and/or amplitude as the harmonics and at an opposite phase, i.e. about 180 degrees out of phase. The active filter 250 can provide this power with a high degree of precision to cancel harmonics, even harmonics close to the fundamental frequency, with reduced or no impact on the power at the fundamental frequency. The active filter 250 (e.g. a parallel active filter 250) may take at least a portion of one or more currents from the system (e.g. a portion of the fundamental current on a bus) as input to offset losses associated with operation of the active filter 250. Other suitable active filters may be used without departing from the scope of the present disclosure.

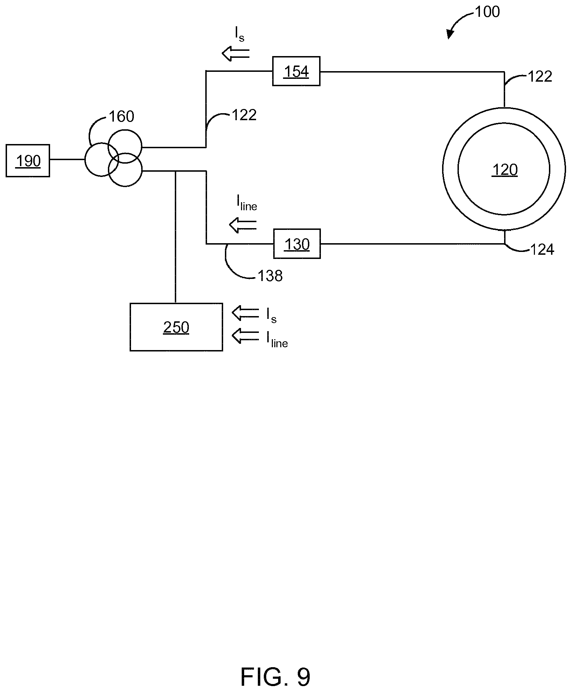

Referring now to FIGS. 9 - 14, example implementations of an active filter used to reduce harmonics, such as harmonics caused by operating a rotor-side converter in an overmodulation regime, are illustrated. A simplified version of the electrical power system shown in FIG. 2 is used for the purpose of illustration. Components illustrated in FIG. 2 that are not illustrated in FIGS. 9-14, along with other suitable components, may still be present in embodiments of the present disclosure.

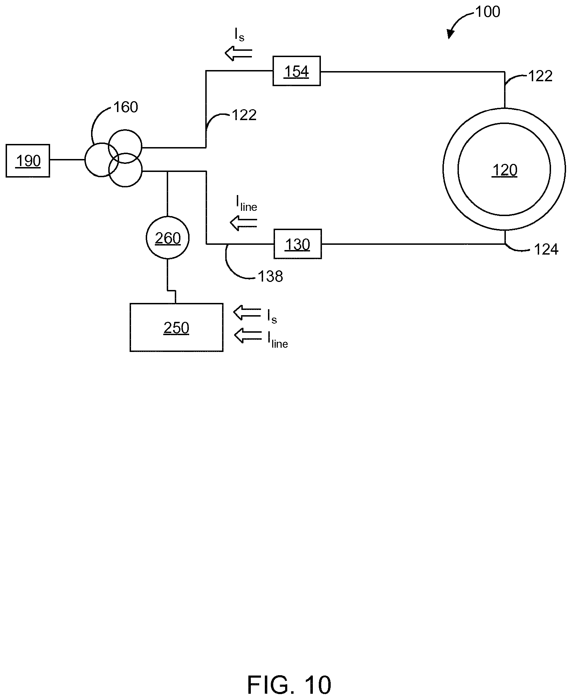

For instance, as shown in FIGS. 9 and 10, an active filter 250 can be provided on the line-side bus 138, i.e. between the power converter 130 and transformer 160. The active filter may take as input Iₛ, i.e. the current on the stator bus 122, and/or lime, i.e. the current on the line-side bus 138. In some embodiments, such as the embodiment shown in FIG.10, a transformer 260, e.g. a dual-winding transformer 260, may be provided between the active filter 250 and the line-side bus 138.

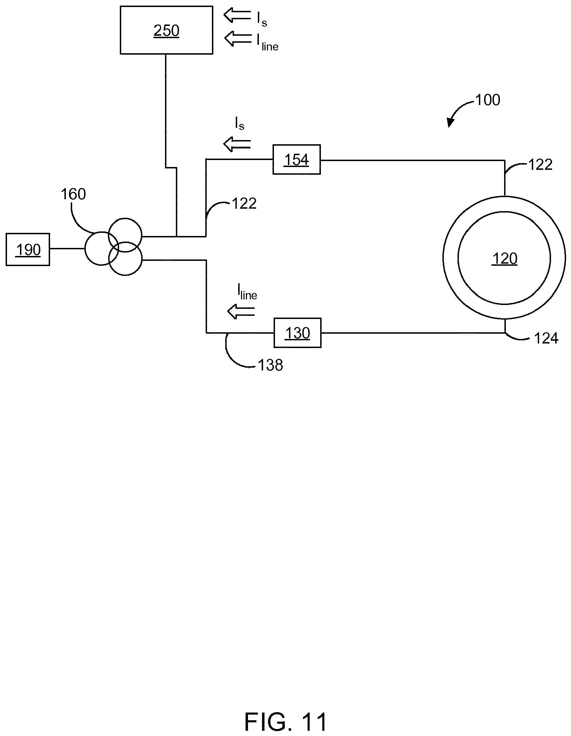

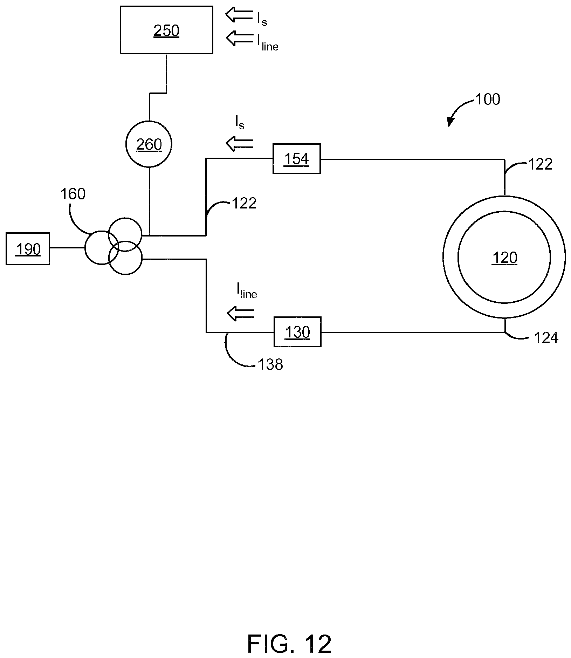

Additionally and/or alternatively, an active filter 250 can be provided on the stator bus 122, such as shown in FIGS. 11 and 12. For instance, the active filter 250 may be provided between the switch 154 and the transformer 160 or in other suitable configuration between the switch 154 and the grid 190. Additionally, the active filter 250 may be provided between the generator 120 and the switch 154. The active filter may take as input Iₛ, i.e. the current on the stator bus 122, and/or Iₗᵢₙₑ, i.e. the current on the line-side bus 138. In some embodiments, such as the embodiment shown in FIG. 12, a transformer 260, e.g. a single-winding transformer 260, may be provided between the active filter 250 and the stator bus 122.

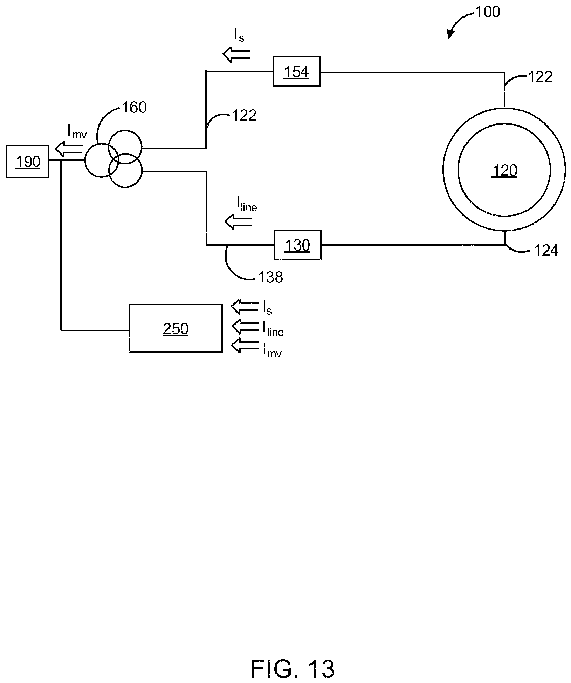

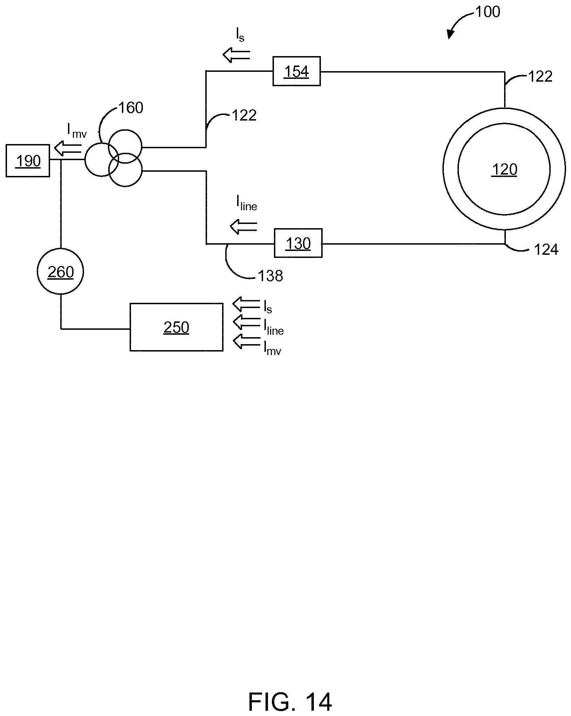

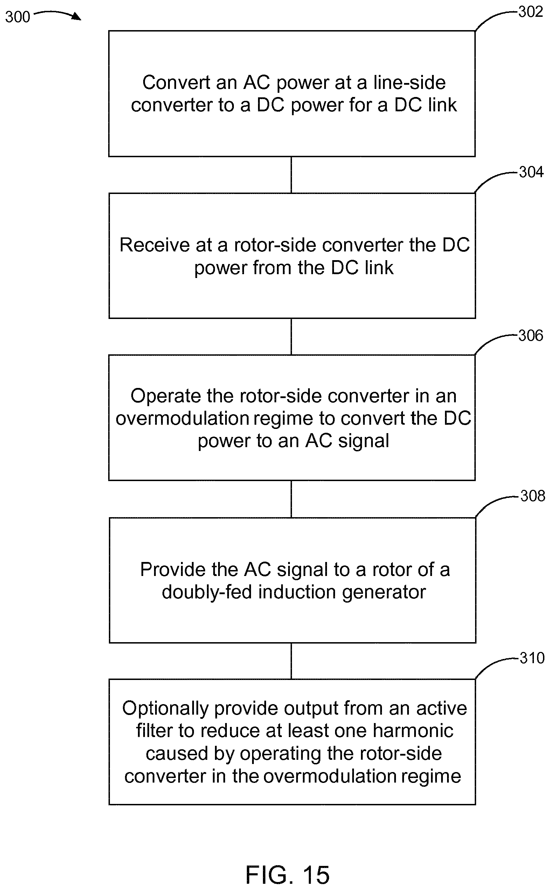

Additionally and/or alternatively, an active filter 250 can be provided between the grid 190 and the transformer 160, such as shown in FIGS. 13 and 14. The active filter may take as input Iₛ, i.e. the current on the stator bus 122, Iₗᵢₙₑ, i.e. the current on the line-side bus 138, and/or Iₘᵥ, i.e. the current flowing to the grid 190. In some embodiments, such as the embodiment shown in FIG. 14, a transformer 260, e.g. a single-winding transformer 260, may be provided between the active filter 250 and the grid 190. Referring now to FIG. 15, a flow diagram of one embodiment of a method 300 for operating a power generation system is illustrated in accordance with aspects of the present subject matter. In general, the method 300 will be described herein as being implemented using a wind turbine system, such as the DFIG wind turbine system 100 described above with reference to FIG. 2.

At (302), the method 300 includes converting an AC power at a line-side converter to a DC power for a DC link. For instance, the line-side converter is part of a power converter, such as the line-side converter 134 of the AC-AC power converter 130 and the DC link may be the DC link 135. The AC power may be three-phase AC power on an AC bus such as the line-side bus 138. The AC power may be converted, for instance, using a plurality of bridge circuits. Other suitable systems for performing AC to DC conversion can be used in accordance with the present method.

At (304), the method 300 includes receiving, at a rotor-side converter, the DC power from the DC link. For instance, the rotor-side converter may be the rotor-side converter 132. The DC power may include a DC link voltage, such as across a DC link capacitor. The rotor-side converter may include a plurality of bridge circuits.

At (306), the method 300 includes operating the rotor-side converter in an overmodulation regime to convert the DC power to an AC signal. For example, the rotor-side converter 132 can be operated according to the overmodulation regime 200 using the converter controller 140. For example, the converter controller 140 provides control signals to the gates of switching elements 142 within the rotor-side converter based on the intersections 208 of a modulating wave 202 and a carrier wave 204, wherein the amplitude of the modulating wave 202 is greater than the amplitude of the carrier wave 204.

At (308), the method 300 includes providing the AC signal to a rotor of a doubly-fed induction generator. For instance, the rotor can have electrical windings with an input terminal or connection used to bias the windings. The AC signal can be provided by an AC bus, such as rotor-side bus 124. The AC signal can be a quasi-square wave (e.g. quasi-square wave 210) produced by controlling the switching elements 142 in the rotor-side converter 132.

At (310), the method 300 includes providing output from an active filter to reduce at least one harmonic caused by operating the rotor-side converter in the overmodulation regime. For instance, the active filter can be parallel active filter 250 or other suitable active filter. The active filter can be provided on the line-side bus 138, the stator bus 122, at the grid 190, or other suitable location. The active filter can provide power, such as AC power, at about the same frequency as the at least one harmonic and at about opposite phase to reduce or cancel the at least one harmonic with minimal or no impact on the power at the fundamental frequency. In some embodiments, a passive filter may be used in addition to an active filter.

## Claims

1. An electrical power system (100), comprising:
a power converter (130) comprising:
a line-side converter (134);
a DC link (135); and
a rotor-side converter (132) comprising one or more switching elements (142), the rotor-side converter (132) configured to convert a DC power on the DC link (135) to an AC signal for a rotor bus (124);
a control system (140) comprising one or more control devices, the one or more control devices configured to operate the one or more switching elements (142) in an overmodulation regime to provide the AC signal for the rotor bus (124), wherein operating the one or more switching elements (142) in the overmodulation regime comprises comparing a modulating wave to a carrier wave, wherein a maximum amplitude of the modulating wave is greater than a maximum amplitude of the carrier wave, and wherein the control system (140) is further configured to toggle the one or more switching elements (142) whenever the carrier wave and the modulating wave intersect;
a transformer (160) electrically coupled to a power grid (190) and the power converter (130);
a doubly-fed induction generator (120) comprising a stator electrically coupled to the transformer (160) via a stator bus (122), and a rotor electrically coupled to the rotor side converter (132) via the rotor bus (124); and
an active filter (250) electrically coupled to the transformer (160) and configured to reduce at least one harmonic caused by operating the one or more switching elements (142) in the overmodulation regime, and only activated when the at least one harmonic does not satisfy a threshold.

2. The electrical power system (100) of claim 1, wherein the one or more control devices are configured to operate the one or more switching elements (142) in the overmodulation regime to generate a quasi-square wave (210) output.

3. The electrical power system (100) of any preceding claim, wherein the active filter (250) is configured to provide active power at the same frequency as at least one harmonic but at opposite phase to near-entirely or entirely cancel the at least one harmonic.

4. The electrical power system (100) of any preceding claim, wherein the active filter (250) is coupled between the power grid (190) and the power converter (130).

5. The electrical power system (100) of any of the claims 1 to 3, wherein the active filter (250) is coupled between the power grid (190) and the stator of the generator (120).

6. The electrical power system (100) of any of the claims 1 to 3, wherein the active filter (250) is coupled between the transformer (160) and the power converter (130).

7. The electrical power system (100) of any of the claims 1 to 3, wherein the active filter (250) is coupled between the transformer (160) and the stator of the generator (120).

8. The electrical power system (100) of any of the claims 1 to 3, wherein the active filter (250) is coupled between the power grid (190) and the transformer (160).

9. The electrical power system (100) of any preceding claim, wherein the one or more control devices are configured for pulse width modulation.

10. A method of operating an electrical power converter (130) for a doubly fed induction generator system (100), the method comprising:
converting an AC power at a line-side converter (134) of the power converter (130) to a DC power for a DC link (135);
receiving at a rotor-side converter (132) comprising one or more switching elements (142) the DC power from the DC link (135);
operating, using one or more control devices, the one or more switching elements (142) of the rotor-side converter (132) in an overmodulation regime to convert the DC power to an AC signal, wherein operating the one or more switching elements (142) in the overmodulation regime comprises comparing a modulating wave to a carrier wave, a maximum amplitude of the modulating wave being greater than a maximum amplitude of the carrier wave, and toggling the one or more switching elements (142) whenever the carrier wave and the modulating wave intersect;
providing the AC signal to a rotor bus (124) of the doubly fed induction generator system (100); and
providing output from an active filter (250) electrically coupled to the transformer (160) to reduce at least one harmonic caused by operating the one or more switching elements (142) in the overmodulation regime, wherein the active filter (250) is only activated when the at least one harmonic does not satisfy a threshold.

11. The method of claim 10, wherein the one or more switching elements (142) are operated in the overmodulation regime to generate a quasi-square wave (210) output.

12. The method of any of claims 10 to 11, further comprising receiving at least one of a current (Iₛ) on a stator bus (122) for electrically coupling the transformer (160) and a stator of a doubly-fed induction generator (120) of the system (100), a current (Iₗᵢₙₑ) on a line-side bus (138) for electrically coupling the transformer (160) and the line-side converter (134), and a current (Iₘᵥ) flowing from the transformer (160) to a grid (190) as input of the **active** filter (250).

## Patentansprüche

1. Elektrisches Energiesystem (100), umfassend:
einen Stromrichter (130), umfassend:
einen netzseitigen Wandler (134);
einen Gleichstromzwischenkreis (135); und
einen rotorseitigen Wandler (132), der ein oder mehrere Schaltelemente (142) umfasst, wobei der rotorseitige Wandler (132) derart konfiguriert ist, dass er eine Gleichstromleistung auf dem Gleichstromzwischenkreis (135) in ein Wechselstromsignal für einen Rotorbus (124) umwandelt;
ein Steuersystem (140), das eine oder mehrere Steuervorrichtungen umfasst, wobei die eine oder die mehreren Steuervorrichtungen derart konfiguriert sind, dass sie das eine oder die mehreren Schaltelemente (142) in einem Übermodulationsmodus betreiben, um das Wechselstromsignal für den Rotorbus (124) bereitzustellen, wobei das Betreiben des einen oder der mehreren Schaltelemente (142) in dem Übermodulationsmodus das Vergleichen einer Modulationswelle mit einer Trägerwelle umfasst, wobei eine maximale Amplitude der modulierenden Welle größer ist als eine maximale Amplitude der Trägerwelle, und wobei das Steuerungssystem (140) derart konfiguriert ist, dass es das eine oder die mehreren Schaltelemente (142) umschaltet, wenn sich die Trägerwelle und die modulierende Welle schneiden;
einen Transformator (160), der elektrisch mit einem Versorgungsnetz (190) und dem Stromrichter (130) verbunden ist;
einen doppelt gespeisten Induktionsgenerator (120), der einen Stator aufweist, der mit dem Transformator (160) mittels einem Statorbus (122) elektrisch verbunden ist, und einen Rotor, der mit dem rotorseitigen Wandler (132) mittels des Rotorbuses (124) elektrisch verbunden ist; und
ein aktiver Filter (250), der elektrisch mit dem Transformator (160) verbunden und derart konfiguriert ist, dass er mindestens eine Oberschwingung reduziert, die durch das Betreiben des einen oder der mehreren Schaltelemente (142) im Übermodulationsmodus verursacht wird, und der nur aktiviert wird, wenn die mindestens eine Oberschwingung einen Schwellenwert nicht erfüllt.

2. Elektrisches Energiesystem (100) nach Anspruch 1, wobei die eine oder die mehreren Steuervorrichtungen derart konfiguriert sind, dass sie das eine oder die mehreren Schaltelemente (142) im Übermodulationsmodus betreiben, um eine Quasi-Rechteckwelle-Ausgabe (210) zu erzeugen.

3. Elektrisches Energiesystem (100) nach einem der vorhergehenden Ansprüche, wobei der aktive Filter (250) derart konfiguriert ist, dass es Wirkleistung mit derselben Frequenz wie mindestens eine Oberschwingung, jedoch mit entgegengesetzter Phase bereitstellt, um die mindestens eine Oberschwingung nahezu oder vollständig auszulöschen.

4. Elektrisches Energiesystem (100) nach einem der vorhergehenden Ansprüche, wobei der aktive Filter (250) mit dem Versorgungsnetz (190) und dem Stromrichter (130) verbunden ist.

5. Elektrisches Energiesystem (100) nach einem der Ansprüche 1 bis 3, wobei der aktive Filter (250) mit dem Versorgungsnetz (190) und dem Stator des Generators (120) verbunden ist.

6. Elektrisches Energiesystem (100) nach einem der Ansprüche 1 bis 3, wobei der aktive Filter (250) zwischen dem Transformator (160) und dem Stromrichter (130) verbunden ist.

7. Elektrisches Energiesystem (100) nach einem der Ansprüche 1 bis 3, bei dem der aktive Filter (250) zwischen dem Transformator (160) und dem Stator des Generators (120) verbunden ist.

8. Elektrisches Energiesystem (100) nach einem der Ansprüche 1 bis 3, bei dem der aktive Filter (250) mit dem Versorgungsnetz (190) und dem Transformator (160) verbunden ist.

9. Elektrisches Energiesystem (100) nach einem der vorhergehenden Ansprüche, wobei die eine oder die mehreren Steuervorrichtungen für eine Pulsweitenmodulation konfiguriert sind.

10. Verfahren zum Betreiben eines elektrischen Stromrichters (130) für ein doppelt gespeistes Induktionsgeneratorsystem (100), wobei das Verfahren umfasst:
Umwandlung eines Wechselstroms an einem netzseitigen Wandler (134) des Stromrichters (130) in einen Gleichstrom für einen Gleichstromzwischenkreis (135);
Erhalten des Gleichstroms aus dem Gleichstromzwischenkreis (135) an einem rotorseitigen Wandler (132), der ein oder mehrere Schaltelemente (142) umfasst;
Betreiben des einen oder der mehreren Schaltelemente (142) des rotorseitigen Wandlers (132) unter Verwendung einer oder mehrerer Steuervorrichtungen in einem Übermodulationsmodus, um die Gleichstromleistung in ein Wechselstromsignal umzuwandeln, wobei das Betreiben des einen oder der mehreren Schaltelemente (142) in dem Übermodulationsmodus das Vergleichen einer modulierenden Welle mit einer Trägerwelle, wobei eine maximale Amplitude der modulierenden Welle größer als eine maximale Amplitude der Trägerwelle ist, und das Umschalten des einen oder der mehreren Schaltelemente (142) umfasst, wenn sich die Trägerwelle und die modulierende Welle schneiden;
Bereitstellen des AC-Signals an einen Rotorbus (124) des doppelt gespeisten Induktionsgeneratorsystems (100); und
Bereitstellen eines Ausgangssignals von einem aktiven Filter (250), das elektrisch mit dem Transformator (160) verbunden ist, um mindestens eine Oberschwingung zu reduzieren, die durch das Betreiben des einen oder der mehreren Schaltelemente (142) im Übermodulationsmodus verursacht wird, wobei der aktive Filter (250) nur aktiviert wird, wenn die mindestens eine Oberschwingung einen Schwellenwert nicht erfüllt.

11. Verfahren nach Anspruch 10, wobei das eine oder die mehreren Schaltelemente (142) im Übermodulationsmodus betrieben werden, um eine Quasi-Rechteckwellen-Ausgabe (210) zu erzeugen.

12. Verfahren nach einem der Ansprüche 10 bis 11, das ferner das Erhalten von mindestens einem von einem Strom (Iₛ) auf einem Statorbus (122) zur elektrischen Verbindung des Transformators (160) mit einem Stator eines doppelt gespeisten Induktionsgenerators (120) des Systems (100), einem Strom (Iₗᵢₙₑ) auf einem netzseitigen Bus (138) zur elektrischen Verbindung des Transformators (160) mit dem netzseitigen Umrichter (134) und einem Stroms (Iₘᵥ), der vom Transformator (160) zu einem Versorgungsnetz (190) fließt, als Eingabe des aktiven Filters (250) umfasst.

## Revendications

1. Système d'alimentation électrique (100), comprenant :
un convertisseur de puissance (130) comprenant :
un convertisseur côté ligne (134) ;
une liaison à courant continu (135) ; et
un convertisseur côté rotor (132) comprenant un ou plusieurs éléments de commutation (142), le convertisseur côté rotor (132) étant configuré pour convertir une puissance en courant continu sur la liaison à courant continu (135) en un signal alternatif pour un bus de rotor (124) ;
un système de commande (140) comprenant un ou plusieurs dispositifs de commande, le ou les dispositifs de commande étant configurés pour faire fonctionner le ou les éléments de commutation (142) dans un régime de surmodulation pour fournir le signal alternatif pour le bus de rotor (124), dans lequel le fonctionnement du ou des éléments de commutation (142) dans le régime de surmodulation comprend la comparaison d'une onde de modulation à une onde porteuse, dans lequel une amplitude maximale de l'onde de modulation est supérieure à une amplitude maximale de l'onde porteuse et dans lequel le système de commande (140) est en outre configuré pour faire basculer le ou les éléments de commutation (142) chaque fois que l'onde porteuse et l'onde de modulation se croisent ;
un transformateur (160) couplé électriquement à un réseau électrique (190) et au convertisseur de puissance (130) ;
un générateur à induction à double alimentation (120) comprenant un stator couplé électriquement au transformateur (160) par le biais d'un bus de stator (122) et un rotor couplé électriquement au convertisseur côté rotor (132) par le biais du bus de rotor (124) ; et
un filtre actif (250) couplé électriquement au transformateur (160) et configuré pour réduire au moins une harmonique provoquée par le fonctionnement d'un ou plusieurs éléments de commutation (142) dans le régime de surmodulation et activé uniquement lorsque la au moins une harmonique ne satisfait pas un seuil.

2. Système d'alimentation électrique (100) selon la revendication 1, dans lequel le ou les dispositifs de commande sont configurés pour faire fonctionner le ou les éléments de commutation (142) dans le régime de surmodulation pour générer une sortie d'onde quasi carrée (210).

3. Système d'alimentation électrique (100) selon une quelconque revendication précédente, dans lequel le filtre actif (250) est configuré pour fournir une puissance active à la même fréquence qu'au moins une harmonique, mais à une phase opposée pour annuler presque entièrement ou entièrement la au moins une harmonique.

4. Système d'alimentation électrique (100) selon une quelconque revendication précédente, dans lequel le filtre actif (250) est couplé entre le réseau électrique (190) et le convertisseur de puissance (130).

5. Système d'alimentation électrique (100) selon l'une quelconque des revendications 1 à 3, dans lequel le filtre actif (250) est couplé entre le réseau électrique (190) et le stator du générateur (120).

6. Système d'alimentation électrique (100) selon l'une quelconque des revendications 1 à 3, dans lequel le filtre actif (250) est couplé entre le transformateur (160) et le convertisseur de puissance (130).

7. Système d'alimentation électrique (100) selon l'une quelconque des revendications 1 à 3, dans lequel le filtre actif (250) est couplé entre le transformateur (160) et le stator du générateur (120).

8. Système d'alimentation électrique (100) selon l'une quelconque des revendications 1 à 3, dans lequel le filtre actif (250) est couplé entre le réseau électrique (190) et le transformateur (160).

9. Système d'alimentation électrique (100) selon une quelconque revendication précédente, dans lequel le ou les dispositifs de commande sont configurés pour une modulation de largeur d'impulsion.

10. Procédé de fonctionnement d'un convertisseur de puissance électrique (130) pour un système de générateur à induction à double alimentation (100), le procédé comprenant de :
convertir une puissance en courant alternatif au niveau d'un convertisseur côté ligne (134) du convertisseur de puissance (130) en une puissance en courant continu pour une liaison à courant continu (135) ;
recevoir au niveau d'un convertisseur côté rotor (132) comprenant un ou plusieurs éléments de commutation (142) la puissance en courant continu à partir de la liaison à courant continu (135) ;
faire fonctionner, en utilisant un ou plusieurs dispositifs de commande, le ou les éléments de commutation (142) du convertisseur côté rotor (132) dans un régime de surmodulation pour convertir la puissance en courant continu en un signal alternatif, dans lequel le fonctionnement du ou des éléments de commutation (142) dans le régime de surmodulation comprend la comparaison d'une onde de modulation à une onde porteuse, une amplitude maximale de l'onde de modulation étant supérieure à une amplitude maximale de l'onde porteuse et faire basculer le ou les éléments de commutation (142) chaque fois que l'onde porteuse et l'onde de modulation se croisent ;
fournir le signal alternatif à un bus de rotor (124) du système de générateur à induction à double alimentation (100) ; et
fournir une sortie d'un filtre actif (250) couplé électriquement au transformateur (160) pour réduire au moins une harmonique provoquée par le fonctionnement du ou des éléments de commutation (142) dans le régime de surmodulation, dans lequel le filtre actif (250) n'est activé que lorsque la au moins une harmonique ne satisfait pas un seuil.

11. Procédé selon la revendication 10, dans lequel le ou les éléments de commutation (142) sont actionnés dans le régime de surmodulation pour générer une sortie d'onde quasi-carrée (210).

12. Procédé selon l'une quelconque des revendications 10 à 11, comprenant en outre la réception d'au moins un courant (Iₛ) sur un bus de stator (122) pour coupler électriquement le transformateur (160) et un stator d'un générateur à induction à double alimentation (120) du système (100), un courant (Iₗᵢₙₑ) sur un bus côté ligne (138) pour coupler électriquement le transformateur (160) et le convertisseur côté ligne (134) et un courant (Iₘᵥ) circulant du transformateur (160) à un réseau (190) en tant qu'entrée du filtre actif (250).
